**Europäisches Patentamt**

**European Patent Office**

**Office européen des brevets**

(19)

(11) Numéro de publication: **0 269 502
B1**

(12)

# FASCICULE DE BREVET EUROPEEN

(45) Date de publication du fascicule du brevet:
**17.10.90**

(51) Int. Cl.⁵: **B65G 35/00**

(21) Numéro de dépôt: **87402499.5**

(22) Date de dépôt: **05.11.87**

(54) **Convoyeur d'objets arrêtant les objets à un poste de travail.**

(30) Priorité: **05.11.86 FR 8615409**

(43) Date de publication de la demande:
**01.06.88 Bulletin 88/22**

(45) Mention de la délivrance du brevet:
**17.10.90 Bulletin 90/42**

(84) Etats contractants désignés:
**DE ES GB SE**

(56) Documents cités:
**EP-A- 0 104 142
FR-A- 1 562 551**

(73) Titulaire: **SOCIETE GIENNOISE DE MECANIQUE ET DE METALLURGIE, Z.I. Avenue des Montoires,
F-45501 Gien Cédex(FR)**

(72) Inventeur: **Borne, Jacques, 9 rue de Musay,
F-95430 Butry(FR)**

(74) Mandataire: **Fort, Jacques et al, CABINET
PLASSERAUD 84, rue d'Amsterdam, F-75009 Paris(FR)**

**Description**

L'invention concerne les convoyeurs comportant un organe souple, tel qu'une chaîne, permettant d'entraîner des objets le long d'un trajet qui les fait passer en succession à un poste de travail.

L'opération à effectuer à ce poste oblige souvent à y arrêter la pièce. Cela a conduit à utiliser des convoyeurs à avance pas à pas, tels que les convoyeurs à pas de pélerin, qui ont l'inconvénient de soumettre l'ensemble des objets portés par le convoyeur à des chocs et à des à-coups.

On connaît également (EP-A-O 104 142) un dispositif permettant d'amener des objets portés par une courroie transporteuse à un emplacement exact, d'où on les fait tomber dans des récipients. Pour cela une partie de la courroie transporteuse sans fin passe sur deux galets de renvoi portés par un coulisseau agissant sur le coulisseau alors que les objets à déposer sont sur un brin de la courroie se terminant à l'un des galets du coulisseau.

La fonction remplie par ce dispositif n'est pas celle recherchée par l'invention : la portion de courroie située entre les galets n'est pas temporairement immobilisée.

Le document FR-A-1 562 551 montre une disposition permettant d'immobiliser temporairement une charge en maintenant une vitesse constante de l'organe principal d'entraînement d'un organe sans fin et fait appel pour cela à un système complexe de coulisseaux.

Rien ne suggère de faire appel à un document décrivant un diposiitf de support de charge pour modifier le convoyeur suivant le document EP-A-0 104 142. Et on ne trouve pas dans le document FR un coulisseau muni de moyens permettant de lui donner un mouvement alternatif.

L'invention vise à fournir un convoyeur de constitution simple, permettant d'arrêter temporairement un objet porté ou entraîné par l'organe souple en un poste (ou en des postes) de travail pendant que la majeure partie de l'organe souple progresse à vitesse constante.

Dans ce but, l'invention propose un convoyeur suivant la revendication 1.

Grâce à l'invention, on peut ainsi maintenir temporairement immobile un objet ou des objets au poste de travail pour y effectuer les opérations nécessaires sans augmenter notablement l'encombrement du convoyeur et en conservant un trajet de circulation unique.

L'immobilisation peut notamment être obtenue en donnant temporairement au coulisseau une vitesse moitié de la vitesse du défilement de l'organe souple et en sens opposé de ce défilement, puis en lui donnant une vitesse de sens contraire afin de "déstocker" la portion d'organe souple qui a été "stockée" lors de la première phase.

Les moyens donnant un mouvement alternatif au coulisseau peuvent être couplés aux moyens d'entraînement de l'organe souple de façon à assurer un synchronisme absolu et que toute modification de vitesse du convoyeur se traduise par la variation nécessaire de vitesse du coulisseau : la seule conséquence d'une telle variation de vitesse est alors une modification du temps d'arrêt, qui varie proportionnellement à la vitesse de l'organe souple.

Dans une variante de réalisation, le coulisseau est découplé des moyens d'entraînement de l'organe souple. Il est entraîné, le long d'un trajet déterminé, par un moteur électrique indépendant associé à un circuit de pilotage d'asservissement éventuellement programmable, comportant un capteur de position du chariot ou d'un objet qu'il porte et éventuellement un capteur de vitesse de l'organe souple.

L'invention est susceptible de nombreuses variantes de réalisation. Une solution simple, mais qui conduit à une immobilisation de durée très brève, consiste à entraîner le coulisseau, à partir d'une roue de guidage ou d'entraînement de l'organe souple, à l'aide d'une liaison bielle-manivelle. Une autre solution permettant de choisir à volonté la durée d'immobilisation, consiste à constituer les moyens d'entraînement du coulisseau par un mécanisme lui donnant un cycle de mouvement comprenant une accélération, une vitesse constante et moitié de la vitesse de défilement de l'organe, une décélération, une accélération en sens contraire jusqu'à une vitesse moitié dans l'autre sens et une décélération. Il est possible d'allonger la fraction de la période de va- et-vient du coulisseau pendant laquelle l'objet est immobilisé à un poste de travail en adoptant une vitesse de retour de coulisseau temporairement supérieure à la moitié de la vitesse de défilement.

L'invention sera mieux comprise à la lecture de la description qui suit de modes particuliers de réalisation donnés à titre d'exemples non limitatifs. La description se réfère aux dessins qui l'accompagnent, dans lesquels:

- la figure 1 est un schéma de principe, en vue de dessus, d'un convoyeur suivant un mode particulier de réalisation de l'invention ;
- la figure 2 montre une variante de réalisation des moyens d'entraînement du coulisseau ;
- la figure 3 montre en perspective les éléments principaux d'un convoyeur conforme au schéma de la figure 1 ;
- la figure 4 montre le détail d'un support d'objet fixé à l'organe souple, permettant de mettre cet objet en rotation lorsqu'il est au poste de travail.

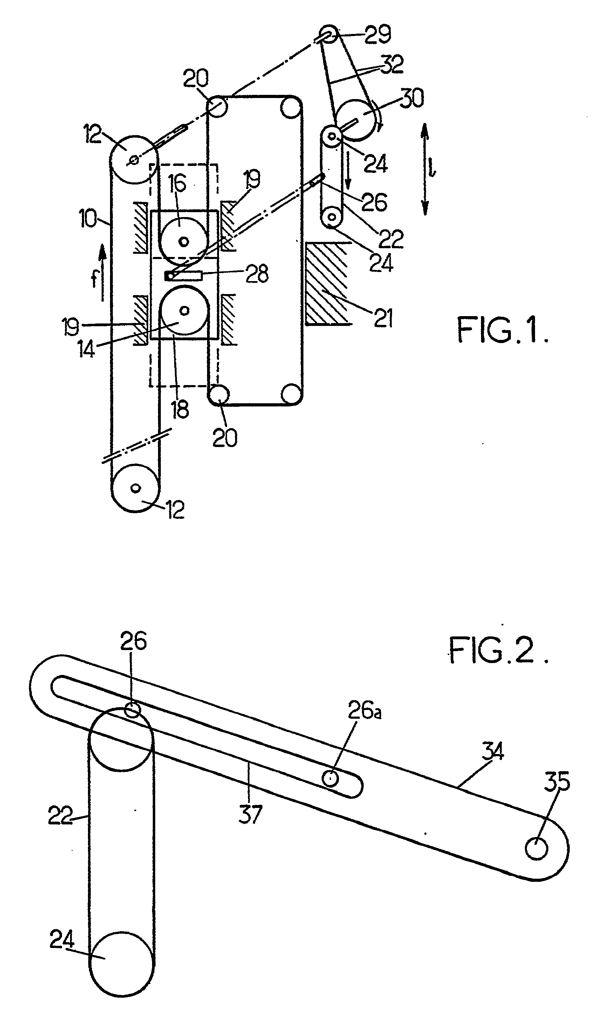

Le convoyeur schématisé en figure 1 comporte un organe souple 10, tel qu'une chaîne, d'entraînement d'objets à traiter le long d'un trajet matérialisé par un rail de guidage non représenté. L'organe souple 10 passe sur des roues de guidage 12 dont une au moins est munie d'un moteur d'entraînement de la chaîne à vitesse constante, mais éventuellement ajustable. Les roues 12 tournent sur des axes fixes. L'organe souple 10 passe également sur deux roues de renvoi 14 et 16 portées par un coulisseua 18 monté dans des guides fixes 19 qui lui permet de se déplacer parallèlement à la direction des brins de l'organe souple qui arrivent sur les roues 14 et 16. Les roues de renvoi 14 et 16 tournent librement sur des axes portés par le coulisseau 18. Entre les roues 14 et 16, l'organe souple passe sur des roues 20 tournant autour d'axes fixés et formant une boucle qui passe devant le poste de travail 21.

Des moyens permettant d'imprimer au coulisseau 18 un mouvement alternatif dans la direction autorisée par les guides 19 comprennent un mécanisme de couplage avec une roue 12. Pour plus de clarté, le mécanisme montré à titre d'exemple sur la figure 1 y est représenté décalé par rapport à sa position réelle. Il comprend une courroie sans fin 22 portée par deux poulies d'axes fixes 24 et munie d'un galet 26 qui s'engage dans une came en creux 28 du coulisseau. Le trajet de la courroie 22 entre les poulies 24 correspond à la direction de déplacement du coulisseau. L'une des poulies 24 est entraînée par l'une des roues 12 de façon que le coulisseau ait un mouvement de va-et-vient temporairement à vitesse moitié de la vitesse de défilement moyen de la chaîne. Le mécanisme de couplage est constitué sur la figure 1 par une poulie 29 solidaire en rotation d'une poulie 12, une poulie 30 de diamètre double de la précédente solidaire d'une des poulies 24 et une courroie de liaison 32.

A titre d'exemple, on peut indiquer qu'un convoyeur conforme au schéma de la figure 1 a été réalisé pour transporter des objets à une vitesse moyenne de 2 m/mn, avec un écartement entre objets de 840 mm. Il faut alors donner temporairement au coulisseau 18 une vitesse de 1 m/mn. Ce résultat a été atteint avec un mécanisme comportant deux poulies 24 dont les axes sont écartés de $\ell = 100$ mm et ayant un diamètre de 70 mm. On obtient ainsi un temps d'arrêt complet au poste de travail de 6 secondes pour une période de cycle complet de 25,2 secondes pendant lequel la partie de l'organe souple 10 située dans la zone à vitesse constante avance de 840 mm, c'est-à-dire de la distance entre deux objets.

De façon générale, on sera amené, dans le cas illustré sur la figure 1, à adopter une longueur de courroie 22 sensiblement égale à l'écartement entre objets successifs portés par le convoyeur.

Lorsque la distance entre objets successifs est faible, il devient difficile de respecter cette condition. Dans ce cas, il est avantageux d'adopter un dispositif démultiplicateur de mouvement entre la courroie 22 et le coulisseau 18. Dans le mode de réalisation montré en figure 2 (où les organes correspondant à ceux de la figure 1 sont désignés par le même numéro de référence, ce résultat est atteint en interposant une bielle 34 tournant autour d'une axe fixe 35 entre le galet 26 porté par la courroie 22 et un galet supplémentaire 26a porté par le coulisseau. Les deux galets sont emprisonnés dans une fente longitudinale 37 de la bielle 34. Dans la pratique, la solution illustrée en figure 2 sera utilisée pour des pas inférieurs à 400 mm dans le cas d'une vitesse de l'ordre du mètre par minute. On évite ainsi d'être gêné par l'encombrement des poulies du mécanisme d'entraînement alternatif du coulisseau.

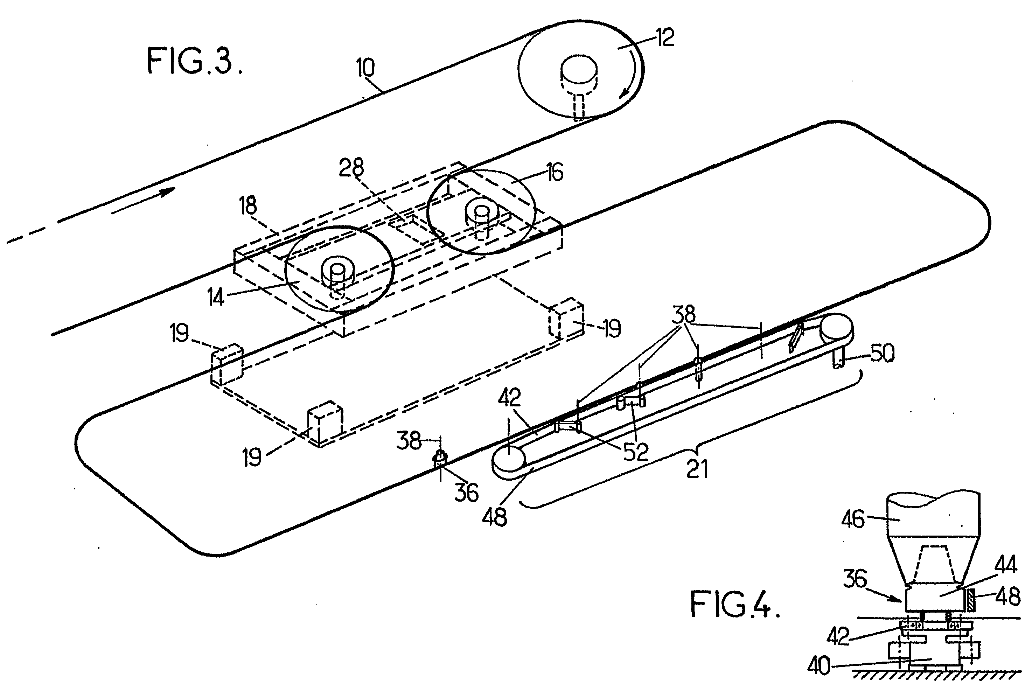

Dans le mode de réalisation montré en figures 3 et 4, où les organes correspondant à ceux de la figure 1 sont encore désignés par le même numéro de référence, le mécanisme d'entraînement du coulisseau n'a pas été représenté, non plus que les poulies de formation de la boucle passant au poste de travail 21. L'organe souple 10 est muni de supports 36 permettant de faire tourner les objets qui sont au poste de travail, situés en des emplacements reportés tels que ceux indiqués sur la figure 3 par les axes 38. Chacun des supports 36 (figure 4) comprend un corps 40 fixé à l'organe 10 et reposant sur un organe de guidage et/ou d'appui tel qu'un rail. Ce corps est muni d'un roulement d'axe vertical 42 portant à son tour un cône 44 de réception d'un objet 46, qui sera généralement de révolution. Le cône présente un flanc d'appui d'une courroie d'entraînement 48 (figure 3) entraîné par un motoréducteur 50. Le cône proprement dit est avantageusement du type universel couramment dénommé cône morse. Des poussoirs à ressort 52 appliquent la courroie 48 contre ceux es cônes 44 qui sont dans la zone de travail, au nombre de quatre dans le mode de réalisation illustré.

Le fonctionnement du convoyeur de la figure 3 apparaît immédiatement : grâce à un mécanisme de synchronisation qui peut avoir une constitution classique, le motoréducteur 50 est alimenté dès que les objets à traiter, par exemple à peindre, sont immobilisés au poste de travail. L'opération, par exemple la peinture, peut alors être effectuée aisément sur la totalité de la surface de l'objet. Puis le motoréducteur est arrêté juste avant que les objets ne soient entraînés de nouveau, à vitesse croissante jusqu'au double de la vitesse moyenne du convoyeur puis, après avoir dépassé la poulie 14, à vitesse constante.

Plusieurs dispositifs d'indexage du type montré sur les figures peuvent être répartis au long d'un même convoyeur.

Dans une variante de réalisation, non représentée, le chariot 18 n'est plus entraîné à partie d'une poulie d'entraînement de l'organe souple, mais par un moteur électrique indépendant, d'un type pouvant être asservi en vitesse et en position. On peut notamment utiliser un groupe constitué d'un moteur synchrone auto-piloté et d'un variateur de vitesse.

Le variateur est associé à un circuit d'asservissement dont l'organe d'entrée sera constitué par un capteur de position fixe, placé au poste de travail 21. Ce capteur fournit une impulsion d'initialisation du circuit d'asservissement lorsque la pièce à traiter arrive à un emplacement déterminé. Un autre capteur (dynamo-tachymétrique par exemple) fournit en permanence la vitesse du capteur au circuit d'asservissement. Ce dernier peut comporter un micro-processeur et être réalisé en cartes de circuit intégré standard. Il peut incorporer des mémoires contenant des cycles préprogrammés correspondant à des temps d'arrêt différents.

La séquence de fonctionnement est la suivante : le capteur placé au poste de travail fournit un signal lorsqu'une pièce y arrive. A partir de cet instant, le circuit d'asservissement prend en charge le déplacement de la pièce et l'asservit à un cycle mémorisé en envoyant au variateur les signaux électriques permettant de donner au chariot la séquence de variation de vitesse appropriée.

**Revendications**

1. Convoyeur comportant un organe souple sans fin (10) muni de moyens d'entraînement à vitesse constante (12) et passant sur des roues de renvoi (14, 16) portées par un coulisseau (18) et sur des roues de guidage fixes (12, 20), caractérisé en ce que les roues de guidage fixes (12, 20) forment une boucle passant devant un poste de travail (21) qui est séparé par le coulisseau de la partie de l'organe souple munie des moyens d'entraînement et en ce que le coulisseau (18) est muni de moyens permettant de lui donner un mouvement alternatif suivant une direction et à une vitesse telles qu'il maintient temporairement immobile une fraction de l'organe souple situé entre les roues de renvoi, les moyens (22, 32) d'entraînement du coulisseau étant prévus pour lui donner une vitesse qui est temporairement moitié de la vitesse de défilement de l'organe souple.

2. Convoyeur selon la revendication 1, caractérisé en ce que les moyens (22, 32) d'entraînement du coulisseau sont prévus pour lui donner une vitesse variant suivant un cycle comprenant une accélération, la vitesse constante moitié de celle de l'organe, une décélération, une accélération en sens contraire jusqu'à une vitesse de retour égale ou supérieure à la moitié de la vitesse de défilement et une décélération.

3. Convoyeur selon la revendication 2, caractérisé en ce que le coulisseau est couplé mécaniquement aux moyens d'entraînement de l'organe souple à vitesse constante.

4. Convoyeur selon la revendication 2, caractérisé en ce que les moyens d'entraînement comportent une courroie (22) sans fin passant sur deux roues (24) qui lui donnent un trajet présentant deux zones partiellement parallèles à la direction de déplacement du coulisseau et portant un galet (26) engagé dans une came du coulisseau, l'une des roues étant entraînée en synchronisme avec l'organe souple avec une démultiplication de 1/2. 5. Convoyeur selon la revendication 4, caractérisé en ce qu'une bielle de démultiplication (34) est interposée entre la courroie (22) et le galet (26a) d'entraînement du coulisseau.

6. Convoyeur selon la revendication 1 ou 2, caractérisé en ce que les moyens d'entraînement du coulisseau sont distincts des moyens d'entraînement de l'organe souple et sont commandés par un circuit de pilotage et d'asservissement ayant des capteurs de position du coulisseau placés à un poste de travail.

7. Convoyeur selon l'une quelconque des revendications précédentes, caractérisé en ce qu'il comprend des moyens (48) d'entraînement en rotation de supports d'objets (36) équipant l'organe souple lorsque lesdits supports sont en un poste de travail situé entre les roues de renvoi.

8. Convoyeur selon la revendication 7, caractérisé en ce que lesdits moyens d'entraînement en rotation comportent une courroie (48) appliquée par des poussoirs élastiques contre une partie rotative desdits supports (36) lorsque ces derniers sont dans une partie rectiligne du trajet de l'organe souple, définie par des roues de guidage (20).

**Claims**

1. Conveyor comprising an endless flexible member (10) provided with means for driving it at a constant speed (12) and circulating on return wheels (14, 16) carried by a slide (18) and on stationary guiding wheels (12, 20), characterized in that the stationary guiding wheels (12, 20) define a loop in front of a working station (21) which is separated by the slide from that part of the flexible member which is provided with the driving means and in that the slide (18) is provided with means for imparting it with an alternating movement along a direction and at a speed such that it temporarily maintains a section of the flexible member which is located between the return means at rest, the means (22, 32) which drive the slide being constructed for imparting to said slide a speed which is temporarily half the circulation speed of the flexible member.

2. Conveyor according to claim 1, characterized in that the means (22, 32) for driving the slide are arranged for imparting to it a speed which varies according to a cycle which comprises an acceleration, a constant speed which is half the speed of the member, a deceleration, an acceleration in the opposite direction up to a return speed which is equal to or greater than half the circulation speed and a deceleration.

3. Conveyor according to claim 2, characterized in that the slide is mechanically coupled to the means for driving the flexible member at a constant speed.

4. Conveyor according to claim 2, characterized in that the driving means comprise an endless belt circulating on two wheels (24) which maintain it along a path having two zones which are partially parallel to the direction of movement of the slide and carrying a roller (26) engaging a cam of the slide, one of the wheels being driven in synchronism with the flexible member with a demultiplication ratio of 1/2.

5. Conveyor according to claim 4, characterized in that a demultiplication link (34) is located between the belt (22) and the roller (26a) which drives the slide.

6. Conveyor according to claim 1 or 2, characterized in that the means for driving the slide are distinct from the means for driving the flexible member and are controlled by a servocontrol circuit having slide position sensors which are located at a working station.

7. Conveyor according to any one of the preceding claims, characterized in that it further comprises means (48) for rotating supports (36) which are arranged for receiving and objects carried by the flexible member when said supports are at a working station located between the return wheels.

8. Conveyor according to claim 7, characterized in that said means for rotating objects comprise a belt (48) applied by resilient pushers against a rotary part of said supports (36) when the latter are in a rectilinear portion of the path of the flexible member, defined by guiding wheels (20).

## Patentansprüche

1. Förderer mit einem biegsamen endlosen Element (10), das versehen ist mit Antriebseinrichtungen (12), die mit konstanter Geschwindigkeit laufen, und über Umlenkräder (14, 16), die von einer Führungsbacke (18) getragen werden, und über feste Führungsräder (12, 20) läuft, dadurch gekennzeichnet, daß die festen Führungsräder (12, 20) eine Schleife bilden, die vor einer Bearbeitungsstelle (21) verläuft, die durch die Führungsbacke getrennt ist von dem Teil des biegsamen Elements, das mit den Antriebseinrichtungen versehen ist, und daß die Führungsbacke (18) mit Einrichtungen versehen ist, die es ihr erlauben, eine wechselnde Bewegung in eine Richtung und bei einer Geschwindigkeit so auszuführen, daß sie ein Teilstück des biegsamen Elements, das zwischen den Umlenkrädern liegt, zeitweilig unbeweglich hält, wobei die Antriebseinrichtungen (22, 32) der Führungsbacke dazu vorgesehen sind, ihr eine Geschwindigkeit zu geben, die zeitweilig halb so hoch ist wie die Durchlaufgeschwindigkeit des biegsamen Elementes.

2. Förderer nach Anspruch 1, dadurch gekennzeichnet, daß die Antriebseinrichtungen (22, 32) der Führungsbacke vorgesehen sind, um ihr eine Geschwindigkeit zu verleihen, die sich entsprechend einem Zyklus ändert, der eine Beschleunigung, eine konstante Geschwindigkeit, die halb so hoch ist wie die des Elements, eine Geschwindigkeitsabnahme, eine Beschleunigung in entgegengesetzter Richtung bis zu einer Rücklaufgeschwindigkeit, die größer oder gleich der Hälfte der Durchlaufgeschwindigkeit ist, und eine Geschwindigkeitsabnahme umfaßt.

3. Förderer nach Anspruch 2, dadurch gekennzeichnet, daß die Führungsbacke mechanisch an die Antriebseinrichtungen des biegsamen Elementes mit konstanter Geschwindigkeit gekoppelt ist.

4. Förderer nach Anspruch 2, dadurch gekennzeichnet, daß die Antriebseinrichtungen ein endloses Band (22) umfassen, das über zwei Rollen (24) läuft, die ihm einen Verlauf geben, der zwei Zonen aufweist, die teilweise parallel zur Verschieberichtung der Führungsbacke sind, und der eine Rolle (26) aufweist, die eingreift in eine Steuerkurve der Führungsbacke, wobei eine der Rollen synchron mit dem biegsamen Element mit einer Untersetzung von 1/2 angetrieben ist.

5. Förderer nach Anspruch 4, dadurch gekennzeichnet, daß eine Untersetzungsstange (34) zwischen dem Band (22) und der Antriebsrolle (26a) der Führungsbacke eingesetzt ist.

6. Förderer nach Anspruch 1 oder 2, dadurch gekennzeichnet, daß die Antriebseinrichtungen der Führungsbacke verschieden sind von den Antriebseinrichtungen des biegsamem Elements und gesteuert werden durch eine Regel- und Steuerschaltung mit Sensoren, die die Position der Führungsbacke feststellen und die bei der Bearbeitungsstelle angeordnet sind.

7. Förderer nach einem der vorhergehenden Ansprüche, dadurch gekennzeichnet, daß er Rotationsantriebseinrichtungen (48) für Werkstückhalterungen (36) umfaßt, die das biegsame Element bestücken, wenn die Halterungen an einer Bearbeitungsstelle sind, die sich zwischen den Umlenkrädern befindet.

8. Förderer nach Anspruch 7, dadurch gekennzeichnet, daß die Rotationsantriebseinrichtungen ein Band (48) umfassen, das von elastischen Stößeln angedrückt wird gegen einen sich drehenden Teil der Halterungen (36), wenn diese sich in einem geradlinigen Teil des Weges des biegsamen Elements befinden, der von den Führungsrädern (20) festgelegt wird.

EP 0 269 502 B1

FIG.1.

FIG.2.

FIG.3.

EP 0 269 502 B1

FIG.4.